# EUROPÄISCHE PATENTSCHRIFT

(11) **EP 1 928 949 B1**
(45) Veröffentlichungstag und Bekanntmachung des Hinweises auf die Patenterteilung: **29.09.2010**
(21) Anmeldenummer: 06776302.9
(22) Anmeldetag: 20.07.2006
(51) Int. Cl.: C08K 5/548

(54) **KAUTSCHUKMISCHUNG UND REIFEN**
RUBBER COMPOUND AND TYRES
MELANGE DE CAOUTCHOUC ET PNEUMATIQUE

(30) Priorität: 17.09.2005 DE 102005044456
(43) Veröffentlichungstag der Anmeldung: 11.06.2008
(73) Patentinhaber: Continental Reifen Deutschland GmbH, 30165 Hannover (DE)
(72) Erfinder: MERGELL, Boris, 30890 Barsinghausen (DE); RECKER, Carla, 30167 Hannover (DE); FEY, Thomas, 34454 Bad Arolsen (DE)
(74) Vertreter: Finger, Karsten
(86) Internationale Anmeldenummer: PCT/EP2006/007135
(87) Internationale Veröffentlichungsnummer: WO 2007/031144

(56) Entgegenhaltungen:
- EP-A- 1 514 898
- EP-A1- 0 670 347
- EP-A1- 1 375 504

## Beschreibung

Die Erfindung betrifft eine schwefelvernetzbare Kautschukmischung für die Herstellung von Laufstreifen für Reifen, die zumindest einen Dienkautschuk, zumindest zwei verschiedene Silan-Kupplungsagenzien, zumindest einen mit den Silan-Kupplungsagenzien wechselwirkenden Füllstoff sowie weitere übliche Zusatzstoffe enthält. Ferner betrifft die Erfindung Reifen, insbesondere Fahrzeugluftreifen, deren Laufstreifen zumindest zum Teil auf der mit Schwefel vulkanisierten Kautschukmischung basieren.

Da die Fahreigenschaften eines Reifens in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche durchgeführt, die Laufstreifenmischungen hinsichtlich ihrer Polymerkomponenten und ihrer Füllstoffe zu variieren. Es ist beispielsweise bekannt, der Kautschukmischung als Füllstoffe Ruß und/oder Kieselsäure zuzusetzen.

Kieselsäure enthaltende Mischung zeigen gegenüber Mischungen, die nur Ruß enthalten, Vorteile im Nassrutschverhalten. Des Weiteren verleihen die Kieselsäure enthaltenden Laufstreifenmischungen dem Reifen einen geringen Rollwiderstand, was einen verminderten Kraftstoffverbrauch mit sich bringt. Aufgrund der steigenden Kraftstoffpreise und der Verknappung fossiler Brennstoffe, ist man heute bestrebt, den Rollwiderstand von Reifen noch weiter zu reduzieren.

Die Verwendung von Kieselsäure in Kautschukmischungen führt aber durch die große spezifische hydrophile Oberfläche der Kieselsäure zu einer hohen Viskosität der Rohmischungen und damit zu schwieriger Verarbeitbarkeit. Es ist seit langem bekannt, dass durch die Verwendung von Silan-Kupplungsagenzien, auch Verstärkungsadditive genannt, diesem Effekt entgegengewirkt werden kann. Als Silan-Kupplungsagenzien werden in der Regel bifunktionelle Organosilane eingesetzt. Dabei reagiert das Silan in einer ersten Stufe unter Abspaltung von Alkoholen mit den oberflächlichen Silanolgruppen der Kieselsäureoberfläche. Diese Reaktion wird Hydrophobierung genannt. In der zweiten Stufe während der Vulkanisation ermöglicht die zweite reaktive Gruppe des Silans, z. B. eine eingebaute Tetrasulfid-Gruppierung nach Aufspaltung, eine chemische Anbindung an den Kautschuk. Mit Silan als Silan-Kupplungsagens wird demnach eine direkte chemische Bindung zwischen Füllstoff und Kautschuk erreicht. Das Organosilan bewirkt infolge der Hydrophobierung eine Verringerung der Viskosität unvulkanisierter kieselsäurehaltiger Mischungen sowie durch die Anbindung an die Kautschukmoleküle einen Verstärkungseffekt in den Vulkanisaten. Mischungen mit Silan-Kupplungsagenzien zeichnen sich durch eine hohe Reversionsbeständigkeit und einen niedrigen Wärmeaufbau bei dynamischer Wechselbeanspruchung (Heat-build-up) aus.

Eine Vielzahl von Silan-Kupplungsagenzien wird für die Kupplung zwischen Kieselsäure und Kautschuk im Stand der Technik vorgeschlagen. Dabei finden vor allem die Organosilanpolysulfide mit 2 bis 8 Schwefelatomen in der Schwefelbrücke bei der Verstärkung von schwefelvulkanisierbaren Kautschukmischungen Verwendung. Die Schwefelbrücke wird dabei zur Anbindung an den Kautschuk gespalten und über die Schwefelatome erfolgt dann die Anbindung an den Kautschuk. So sind z. B. aus der DE 25 36 674 C3 und der DE 22 55 577 C3 vulkanisierbare Kautschukmischungen bekannt, die als Verstärkungsadditive Organosilane der allgemeinen Formel Z-Alk-Sₙ-Alk-Z enthalten, wobei n eine Zahl von 2 bis 6 darstellt. Damit beide Gruppen Z eines Moleküls für die Kupplung zwischen Kieselsäure und Kautschuk genutzt werden können und eine Anbindung an den Kautschuk überhaupt stattfinden kann, müssen für ein als Kupplungsagens wirksames Organosilanpolysulfid mindestens zwei Schwefelatome die Brücke bilden. Diese genannten Additive beeinflussen die Herstellung der Kautschukmischung und die Eigenschaften der Vulkanisate günstig. Zusätzlich ist mit solchen Organosilanpolysulfiden die 3 oder mehr Schwefelatome in der Brücke aufweisen eine Vernetzung ohne Zusatz von elementarem Schwefel möglich, da diese Verbindungen bei erhöhten Temperaturen als Schwefelspender wirken.

Der vorliegenden Erfindung liegt die Aufgabe zugrunde, eine schwefelvemetzbare Kautschukmischung, insbesondere für die Laufstreifen von Fahrzeugreifen, bereitzustellen, deren Vulkanisate sich durch einen verringerten Verlustfaktor tan δ bei 55°C bei verbessertem Nassgriff und verbessertem Eisgriff auszeichnen.

In der Reifenindustrie gilt bei Reifenlaufstreifenmischungen der Verlustfaktor tan δ bei 55°C als Maß für den Rollwiderstand. Wird die Kautschukmischung mit einem verringerten Verlustfaktor tan δ bei 55 °C mit den vorgenannten Eigenschaften für den Laufstreifen eines Fahrzeugluftreifens verwendet, so weist der Reifen einen reduzierten Rollwiderstand auf.

Gelöst wird diese Aufgabe durch eine Kautschukmischung mit den Merkmalen des Anspruchs 1.

Für Silan-Kupplungsagenzien der folgenden Struktur:

Z-R²-X-R¹-Sₙ-R¹-X-R²-Z

wobei Z ausgewählt ist aus der Gruppe bestehend aus: 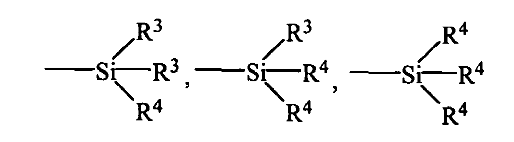 worin R³ eine Alkylgruppe mit 1 bis 4 Kohlenstoffatomen, eine Cycloalkylgruppe mit 5 bis 8 Kohlenstoffatomen oder ein Phenylrest ist, wobei die R³ in einem Molekül gleich oder verschieden sein können, R⁴ eine Alkoxygruppe mit 1 bis 4 Kohlenstoffatomen, eine Cycloalkoxygruppe mit 5 bis 8 Kohlenstoffatomen oder ein Phenoxygruppe ist, wobei die R⁴ in einem Molekül gleich oder verschieden sein können,
wobei R¹ und R² unabhängig voneinander Alkylengruppen mit 1 bis 18 Kohlenstoffatomen sind,
wobei X ausgewählt ist aus Schwefel oder Sauerstoff,
und mit n = 2 bis 8, die z. B. in der EP 1 375 504 A1, der EP 0 670 347 A1 und der EP 1 514 898 A1 beschrieben sind, wurde gefunden, dass der Verlustfaktor tan δ bei 55 °C noch weiter reduziert werden kann, was in einer Rollwiderstandsverringerung bei Reifen mit einem Laufstreifen aus der Mischung resultiert. Der Spacer zwischen der Triethoxysilyl-Gruppe und der -Sₙ-Gruppe in der Mitte des Moleküls scheint die Wahrscheinlichkeit zur Ankopplung des Silan-Kupplungsagens an die Kautschukmoleküle zu erhöhen. Die Kopplungseffizienz kann scheinbar erhöht werden. Der Payne-Effekt, d. h., die Erhöhung der Hysterese durch Abbau von Füllstoffstrukturen, wird reduziert.

Die Kautschukmischungen weisen zusätzlich den Vorteil einer erhöhten Härte bei Raumtemperatur auf, was bei Verwendung als Reifenlaufstreifen zu einem verbesserten Handlingverhalten führt. Ferner zeigen die Mischungen verkürzte Heizzeiten.

Für eine besonders effektive Reduktion des Rollwiderstandes hat es sich als sinnvoll erwiesen, wenn die Kautschukmischung 3 bis 20 phf (= Gewichtsteile bezogen auf 100 Gewichtsteile des mit dem Silan-Kupplungsagens wechselwirkenden Füllstoffs, parts per hundred parts by weight of filler) Silan-Kupplungsagens enthält. Bei der Dosierung ist zu berücksichtigen, dass bei länger werdendem Spacer das Molekulargewicht steigt, ohne dass die Anzahl der kopplungsaktiven Gruppen im Molekül steigt, so dass bei Molekülen mit höherem Molekulargewicht das Gewichtsverhältnis von Silan-Kupplungsagens zu Füllstoff entsprechend erhöht werden muss.

Bei den X im Silan-Kupplungsagens kann es sich unabhängig voneinander um ein Schwefel- oder ein Sauerstoffatom handeln. Vorteilhaft ist, wenn beide X im Molekül Schwefelatome sind. Alternativ dazu können auch beide X im Molekül Sauerstoffatome sein. Letztere Silan-Kupplungsagenzien lassen sich einfacher synthetisieren.

Die Kautschukmischung kann ein oder mehrere Silan-Kupplungsagenzien a) und/oder b) enthalten. Die Kautschukmischung weist aber außerdem noch weitere Silan-Kupplungsagenzien anderer Struktur auf. Bei Verwendung von zumindest zwei verschiedenen Silan-Kupplungsagenzien kann man im Hinblick auf typische gewünschte Reifeneigenschaften positive Effekte erzielen.

Als besonders vorteilhaft hat es sich erwiesen, wenn neben den Silan-Kupplungsagenzien a) und/oder b) noch ein Silan-Kupplungsagens der folgenden Struktur eingesetzt wird:

C₂H₅O)₃Si-(CH₂)₃-Sₘ-(CH₂)₃-Si(OC₂H₅)₃

mit m = 1 bis 8.

Dabei kann es sich beispielsweise um 3,3`-Bis(triethoxysilylpropyl)polysulfide mit 2 bis 8 Schwefelatomen, wie z. B. 3,3`-Bis(triethoxysilylpropyl)tetrasulfid (TESPT), handeln. Durch die Verwendung dieses weiteren Silan-Kupplungsagens kann der Verlustfaktor tan δ bei 0 °C, der bei Reifenlaufstreifen als Maß für den Nassgriff gilt, erhöht werden, ohne den Verlustfaktor tan δ bei 55 °C negativ zu beeinflussen. Der Konflikt zwischen den sich üblicherweise konträr verhaltenden Eigenschaften Nassgriff und Rollwiderstand kann auf diese Weise gelöst werden.

Als besonders vorteilhaft im Hinblick auf die Lösung des Konfliktes zwischen Rollwiderstand und Nassgriff hat es sich erwiesen, wenn als Silan-Kupplungsagenzien
a) (C₂H₅O)₃Si-(CH₂)₃-X-(CH₂)₆-S₂-(CH₂)₆-X-(CH₂)₃-Si(OC₂H₅)₃ und/oder
b) (C₂H₅O)₃Si-(CH₂)₃-X-(CH₂)₁₀-S₂-(CH₂)₆-X-(CH₂)₁₀-Si(OC₂H₅)₃, vorzugsweise mit Schwefelatomen für beide X, in Kombination mit
c) (C₂H₅O)₃Si-(CH₂)₃-Sₘ-(CH₂)₃-Si(OC₂H₅)₃ eingesetzt wird bzw. werden.

Das molare Verhältnis von a) und/oder b) zu c) beträgt 5:1 bis 1:5 mol%, insbesondere 3:1 bis 1:3 mol%, besonders bevorzugt 2:1 bis 1:2 mol%. Das in üblichen Kautschukmischungen für Reifenlaufstreifen verwendete Organosilan des Typs (C₂H₅O)₃Si-(CH₂)₃-Sₘ-(CH₂)₃-Si(OC₂H₅)₃ wird in den Mischungen molar gegen (C₂H₅O)₃Si-(CH₂)₃-X-(CH₂)₆-S₂-(CH₂)₆-X-(CH₂)₃-Si(OC₂H₅)₃ und/oder (C₂H₅O)₃Si-(CH₂)₃-X-(CH₂)₁₀-S₂-(CH₂)₆-X-(CH₂)₁₀-Si(OC₂H₅)₃ ausgetauscht.

Die schwefelvemetzbare Kautschukmischung gemäß der Erfindung enthält zumindest einen Dienkautschuk. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk (NR), synthetischem Polyisopren (IR), Polybutadien (BR) und Styrol-Butadien-Copolymer (SBR). Diese Dienelastomere lassen sich gut zu der erfindungsgemäßen Kautschukmischung verarbeiten und ergeben in den vulkanisierten Reifen gute Reifeneigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Enthält die Kautschukmischung als Dienkautschuk Polybutadien (BR), kann es sich dabei sowohl um cis-1,4- als auch um Vinyl-Polybutadien (10-90 Gew.-% Vinyl-Anteil) handeln. Cis-1,4-Polybutadien mit einem cis-1,4-Anteil größer 90 Gew.-%, kann z. B. durch Lösungspolymerisation in Anwesenheit von Katalysatoren vom Typ der seltenen Erden hergestellt werden.

Bei dem Styrol-Butadien-Copolymer kann es sich um lösungspolymerisiertes Styrol-Butadien-Copolymer (S-SBR) mit einem Styrolgehalt, bezogen auf das Polymer, von ca. 10 bis 45 Gew.-% und einem Vinylgehalt (Gehalt an 1,2-gebundenem Butadien, bezogen auf das gesamte Polymer) von 10 bis 70 Gew.-% handeln, welches zum Beispiel unter Verwendung von Lithiumalkylen in organischem Lösungsmittel hergestellt werden kann. Die S-SBR können auch gekoppelt und/oder endgruppenmodifiziert sein. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Zusätzlich zu den genannten Dienkautschuken kann die Mischung aber auch noch andere Kautschuktypen, wie z. B. Styrol-Isopren-Butadien-Terpolymer, Butylkautschuk, Isopren-Butadien-Kautschuk, Halobutylkautschuk oder Ethylen-Propylen-Dien-Kautschuk (EPDM), enthalten.

Die erfindungsgemäße Kautschukmischung enthält zumindest einen mit dem Silan-Kupplungsagens wechselwirkenden Füllstoff. Dabei kann es sich um polare Füllstoffe, wie Aluminiumoxide oder -hydroxide, Schichtsilikate, Alumosilikate oder mit Kieselsäure dotierte Ruße, handeln. Vorzugsweise wird als mit dem Silan-Kupplungsagens wechselwirkender Füllstoff jedoch Kieselsäure eingesetzt. Vorzugsweise wird eine fein verteilte, gefällte Kieselsäure verwendet, die eine Stickstoff-Oberfläche (BET-Oberfläche) (gemäß DIN 66131 und 66132) von 35 bis 350 m²/g, vorzugsweise von 145 bis 270 m²/g und eine CTAB-Oberfläche (gemäß ASTM D 3765) von 30 bis 350 m²/g, vorzugsweise von 120 bis 285 m²/g, aufweist. Derartige Kieselsäuren führen z. B. in Kautschukmischungen für Reifenlaufstreifen zu besonders guten physikalischen Eigenschaften der Vulkanisate. Außerdem können sich Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs VN3 (Handelsname) der Firma Degussa als auch hoch dispergierbare Kieselsäuren, so genannte HD-Kieselsäuren (z. B. Ultrasil 7000 der Firma Degussa), zum Einsatz kommen. Auch so genannte HDRS-Typen (high dispersible reactive silica) können verwendet werden.

Der wechselwirkende Füllstoff wird bevorzugt in Mengen von 10 bis 140 phr in der Kautschukmischung verwendet.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Neben dem mit dem Silan-Kupplungsagens wechselwirkenden Füllstoff kann die Kautschukmischung weitere Füllstoffe, beispielsweise Ruß, enthalten. Die verwendbaren Ruße weisen bevorzugt folgende Charakteristika auf: DBP-Zahl (gemäß ASTM D 2414) 90 bis 200 mL/100 g, CTAB-Zahl (gemäß ASTM D 3765) 80 bis 170 m²/g und lodadsorptionszahl (gemäß ASTM D 1510) 10 bis 250 g/kg.

Die Kautschukmischung kann außer den genannten Substanzen noch andere Zusatzstoffe, wie z. B. Weichmacher (z. B. aromatische, naphthenische oder paraffinische Mineralölweichmacher, MES (mild extraction solvate), TDAE (treated distillate aromatic extract), RAE (residual aromatic extract), Rapsöl oder flüssige Polymere, beispielsweise flüssiges Butadien-Styrol-Random-Copolymere oder flüssiges Polybutadien) aufweisen.

Des Weiteren kann die erfindungsgemäße Kautschukmischung weitere übliche Zusatzstoffe in üblichen Gewichtsteilen enthalten. Zu diesen Zusatzstoffen zählen Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Zinkoxid und Fettsäuren (z. B. Stearinsäure), Wachse, Harze und Mastikationshilfsmittel, wie z. B. 2,2'-Dibenzamidodiphenyldisulfid (DBD).

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden zusammen mit den Beschleunigern im letzten Mischungsschritt in den vom Fachmann gebräuchlichen Mengen (0,4 bis 6 phr, Schwefel bevorzugt in Mengen von 1,0 bis 2,5 phr) der Kautschukmischung zugesetzt.

Ferner kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide, Dithiophosphate. Die Beschleuniger können auch in Kombination miteinander eingesetzt werden, wobei sich synergistische Effekte ergeben können.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems enthält, in einer oder mehreren Mischstufe(n) hergestellt wird und im Anschluss durch Zugabe des Vulkanisationssystems die Fertigmischung erzeugt wird. Anschließend wird die Mischung weiterverarbeitet, z. B. durch einen Extrusionsvorgang, und in die entsprechende Form gebracht. Die Kautschukmischung kann z. B. für verschiedene Reifenbauteile, beispielsweise als Mischung im Kern- und/oder Gürtelbereich oder als mondsichelförmige Notlaufeinlage im Seitenwandbereich eingesetzt werden. Bevorzugt wird die Mischung jedoch als Laufstreifen eingesetzt und zu diesem Zweck in die Form eines Laufstreifens gebracht. Ein so erzeugter Laufstreifenmischungsrohling wird bei der Herstellung des Reifenrohlings, insbesondere des Fahrzeugluftreifenrohlings, wie bekannt, aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden.

Nach der Vulkanisation weisen die Vulkanisate einen verringerten Verlustfaktor tan δ bei 55 °C auf. Fahrzeugluftreifen mit einem Laufstreifen aus einer solchen Mischung weisen einen verringerten Rollwiderstand auf.

Die Erfindung soll nun anhand von Vergleichs- und Ausführungsbeispielen, die in den Tabellen 1 zusammengefasst sind, näher erläutert werden.

Bei sämtlichen in der Tabelle 1 enthaltenen Mischungsbeispielen sind die angegebenen Mengenangaben Gewichtsteile, die auf 100 Gewichtsteile Gesamtkautschuk bezogen sind (phr). Die Vergleichsmischung ist mit V gekennzeichnet, die erfindungsgemäßen Mischungen sind mit E gekennzeichnet. Die Mischungen in der Tabelle 1 unterscheiden sich nur in Art und Menge der verwendeten Silan-Kupplungsagenzien, die übrigen Mischungsbestandteile bleiben unverändert.

Die Mischungsherstellung erfolgte unter üblichen Bedingungen in zwei Stufen in einem Labortangentialmischer. Es wurden die Umsatzzeiten bis zum Erreichen der relativen Vernetzungsgrade von 5 und 90 % (t₅, t₉₀) über ein rotorloses Vulkameter (MDR = Moving Disc Rheometer) gemäß DIN 53 529 ermittelt. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im

Folgenden angegebenen Testverfahren ermittelt.
- Shore-A-Härte bei Raumtemperatur und 70 °C gemäß DIN 53 505
- Rückprallelastizität bei Raumtemperatur und 70 °C gemäß DIN 53 512
- Zugfestigkeit bei Raumtemperatur gemäß DIN 53 504
- Reißdehnung bei Raumtemperatur gemäß DIN 53 504
- Spannungswerte bei 50, 100, 200 und 300 % Dehnung bei Raumtemperatur gemäß DIN 53 504
- Bruchenergiedichte bestimmt im Zugversuch nach DIN 53 504, wobei die Bruchenergiedichte die bis zum Bruch erforderliche Arbeit, bezogen auf das Volumen der Probe, ist
- Dynamischer Elastizitätsmodul E' bei 8 % dynamischer Verformungsamplitude gemäß DIN 53 513 aus Messung bei konstanter Temperatur von 55 °C und einer Vorverformung von 20 % in Kompression mit 10 Hz dynamischer Verformungsfrequenz
- Dynamischer Elastizitätsmodul E' bei -10 °C DIN 53 513 aus Messung mit konstanter Verformungsamplitude von 0,2 % bei 10 % Vorverformung in Kompression mit 10 Hz dynamischer Verformungsfrequenz
- Verlustfaktor tan δ bei 0 und 55 °C gemäß DIN 53 513 aus Messung mit konstanter Verformungsamplitude von 0,2 % bei 10 % Vorverformung in Kompression mit 10 Hz dynamischer Verformungsfrequenz
- Abrieb bei Raumtemperatur gemäß DIN 53516

**Tabelle 1**

| **Bestandteile** | **Einheit** | **1(V)** | **2(V)** | **3(V)** | **4(E)** | **5(E)** |
|---|---|---|---|---|---|---|
| BR^{a} | phr | 23 | 23 | 23 | 23 | 23 |
| S-SBR^{b} | phr | 77 | 77 | 77 | 77 | 77 |
| Kieselsäure^{c} | phr | 95 | 95 | 95 | 95 | 95 |
| Weichmacheröl | phr | 35 | 35 | 35 | 35 | 35 |
| Alterungsschutzmittel | phr | 4 | 4 | 4 | 4 | 4 |
| Ozonschutzwachs | phr | 2 | 2 | 2 | 2 | 2 |
| Zinkoxid | phr | 2,5 | 2,5 | 2,5 | 2,5 | 2,5 |
| Stearinsäure | phr | 2,5 | 2,5 | 2,5 | 2,5 | 2,5 |
| Silan-Kupplungsagens A^{d} | phr | - | 12,03 | - | 4,01 | - |
| Silan-Kupplungsagens B^{e} | phr | - | - | 13,94 | - | 4,65 |
| Silan-Kupplungsagens C^{f} | phr | 8,08 | - | - | 5,38 | 5,38 |
| DPG | phr | 2 | 2 | 2 | 2 | 2 |
| CBS | phr | 2 | 2 | 2 | 2 | 2 |
| Schwefel | phr | 2 | 2 | 2 | 2 | 2 |
| **Eigenschaften** | | | | | | |
| t₅ | min | 1,58 | 1,19 | 0,72 | 1,41 | 1,34 |
| t₉₀ | min | 23,31 | 14,59 | 17,79 | 15,65 | 16,26 |
| Härte bei RT | Shore A | 73,6 | 77,1 | 74,2 | 74,7 | 74,6 |
| Härte bei 70°C | Shore A | 71 | 74,9 | 71,3 | 72,6 | 71,8 |
| Rückprallelast. bei RT | % | 24,7 | 29 | 29,8 | 26 | 26,3 |
| Rückprallelast. bei 70 °C | % | 43,6 | 46,9 | 48,2 | 46 | 47,5 |
| (Rüpra 70°C - Rüpra RT) | - | 18,9 | 17,9 | 18,4 | 20 | 21,2 |
| Zugfestigkeit bei RT | MPa | 14,6 | 13 | 14,8 | 14,2 | 15,1 |
| Reißdehnung bei RT | % | 428 | 362 | 422 | 407 | 422 |
| Spannungswert 50% | MPa | 1,71 | 2,13 | 1,7 | 1,81 | 1,79 |
| Spannungswert 100 % | MPa | 3,04 | 3,64 | 2,87 | 3,21 | 3,18 |
| Spannungswert 200 % | MPa | 6,1 | 7,02 | 6,13 | 6,43 | 6,48 |
| Spannungswert 300 % | MPa | 10,21 | 11,44 | 10,52 | 10,72 | 10,87 |
| Bruchenergiedichte | J/cm³ | 26,3 | 20,9 | 25,8 | 24,6 | 26,9 |
| E' 8% | MPa | 6,454 | 7,918 | 6,476 | 6,669 | 6,702 |
| E' -10°C | MPa | 88,442 | 101,088 | 74,542 | 72,662 | 77,344 |
| tan δ 0°C | - | 0,414 | 0,373 | 0,369 | 0,429 | 0,417 |
| tan δ 55°C | - | 0,189 | 0,157 | 0,158 | 0,179 | 0,173 |
| (tan δ 0 °C - tan δ 55 °C) | - | 0,225 | 0,216 | 0,211 | 0,250 | 0,244 |
| Abrieb | mm³ | 125,76 | 119,98 | 136,06 | 129,88 | 129,47 |

| | | | | | | |
|---|---|---|---|---|---|---|
| ^{a} High-cis Polybutadien ^{b} lösungspolymerisiertes Styrol-Butadien-Copolymer, Styrolgehalt: 21 Gew.-%, Vinylanteil 61 %, endgruppenmodifiziert und zinngekoppelt ^{c}Ultrasil^{®} VN3, Firma Degussa, Deutschland ^{d}C₂H₅O)₃Si-(CH₂)₃-S-(CH₂)₆-S₂-(CH₂)₆-S-(CH₂)₃-Si(OC₂H₅)₃ ^{e}(C₂H₅O)₃Si-(CH₂)₃-S-(CH₂)₁₀-S₂-(CH₂)₆-S-(CH₂)₁₀-Si(OC₂H₅)₃ ^{f}(C₂H₅O)₃Si-(CH₂)₃-S₂-(CH₂)₃-Si(OC₂H₅)₃ | | | | | | |

Aus der Tabelle 1 wird ersichtlich, dass durch den Einsatz der speziellen Silan-Kupplungsagenzien (Mischungen 2 bis 5) der Verlustfaktor tan δ bei 55 °C überraschenderweise im Vergleich zur Mischung 1 mit einem herkömmlichen Silan-Kupplungsagens verringert werden kann, was bei Reifenlaufflächenmischungen gleichbedeutend mit einer Reduktion des Rollwiderstandes ist. Auch die erhöhte Rückprallelstizität bei 70 °C gilt als Indiz für einen verringerten Rollwiderstand. Zusätzlich zeigt sich bei den Mischungen 2 bis 5, dass sie als Reifenlaufstreifenmischung ein leicht verbessertes Handling aufweisen, da die Härte bei Raumtemperatur und der E' bei 8 %, die als Indiz für das Handling gelten, erhöht sind. Bei den erfindungsgemäßen Mischungen ist ferner die Heizzeit t₉₀ verkürzt_{.}

Werden die Silan-Kupplungsagenzien A oder B mit dem Silan-Kupplungsagens C kombiniert (Mischungen 4 und 5), so kann zusätzlich der Nassgriff gemessen am Verlustfaktor tan δ bei 0 °C (höherer Verlustfaktor tan δ bei 0 °C = verbesserter Nassgriff) im Vergleich zu den Mischungen 2 und 3 auf ein höheres Niveau gebracht werden: Der Konflikt zwischen Rollwiderstand und Nassgriff wird dadurch entschärft. Die Mischungen 4 und 5 zeichnen sich außerdem durch einen verbesserten Eisgriff, sichtbar am verringertem E' bei -10 °C, aus.

## Patentansprüche

1. Schwefelvernetzbare Kautschukmischung für die Herstellung von Laufstreifen für Reifen, die zumindest einen Dienkautschuk, zumindest zwei verschiedene Silan-Kupplungsagenzien, zumindest einen mit den Silan-Kupplungsagenzien wechselwirkenden Füllstoff sowie weitere übliche Zusatzstoffe enthält,
**dadurch gekennzeichnet, dass**
sie als Silan-Kupplungsagenzien a) (C₂H₅O)₃Si-(CH₂)₃-X-(CH₂)₆-S₂-(CH₂)₆-X-(CH₂)₃-Si(OC₂H₅)₃ und/oder b) (C₂H₅O)₃Si-(CH₂)₃-X-(CH₂)₁₀-S₂-(CH₂)₆-X-(CH₂)₁₀-Si(OC₂H₅)₃
in Kombination mit c) (C₂H₅O)₃Si-(CH₂)₃-Sₘ-(CH₂)₃-Si(OC₂H₅)₃ mit m = 1 bis 8 enthält,
wobei X ausgewählt ist aus Schwefel oder Sauerstoff und
wobei das molare Verhältnis von a) und/oder b) zu c) 5:1 bis 1:5 mol% beträgt.

2. Kautschukmischung nach Anspruch 1, **dadurch gekennzeichnet, dass** das molare Verhältnis von a) und/oder b) zu c) 3:1 bis 1:3, vorzugsweise 2:1 bis 1:2 mol%, beträgt.

3. Kautschukmischung nach Anspruch 1 oder 2, **dadurch gekennzeichnet, dass** sie 3 bis 20 phf (Gewichtsteile bezogen auf 100 Gewichtsteile des mit dem Silan-Kupplungsagens wechselwirkenden Füllstoffs) Silan-Kupplungsagens enthält.

4. Kautschukmischung nach zumindest einem der Ansprüche 1 bis 3, **dadurch gekennzeichnet, dass** die X im Silan-Kupplungsagens a) und/oder b) Schwefelatome sind.

5. Kautschukmischung nach zumindest einem der Ansprüche 1 bis 3, **dadurch gekennzeichnet, dass** die X im Silan-Kupplungsagens a) und/oder b) Sauerstoffatome sind.

6. Kautschukmischung nach zumindest einem der vorhergehenden Ansprüche, **dadurch gekennzeichnet, dass** der mit den Silan-Kupplungsagenzien wechselwirkende Füllstoff Kieselsäure ist.

7. Kautschukmischung nach zumindest einem der vorhergehenden Ansprüche, **dadurch gekennzeichnet, dass** sie 10 bis 140 phr (Gewichtsteile bezogen auf 100 Gewichtsteile der gesamten Kautschukkomponenten) mit den Silan-Kupplungsagenzien wechselwirkenden Füllstoff enthält.

8. Reifen, insbesondere Fahrzeugluftreifen, dessen Laufstreifen zumindest zum Teil auf einer mit Schwefel vulkanisierten Kautschukmischung nach einem der Ansprüche 1 bis 7 basiert.

## Claims

1. Sulfur-crosslinkable rubber compound for the production of treads for tires which contains at least one diene rubber, at least two different silane coupling agents, at least one filler interacting with the silane coupling agents, and further customary additives,
**characterized in that**
it contains, as silane coupling agents, a) (C₂H₅O)₃Si- (CH₂) ₃-X- (CH₂) ₆-S₂- (CH₂) ₆-X- (CH₂) ₃-Si(OC₂H₅) ₃ and/or b) (C₂H₅O)₃Si-(CH₂)₃-X-(CH₃)₁₀-S₂-(CH₂)₆-X- (CH₂)₁₀-Si (OC₂H₅)₃
in combination with c) (C₂H₅O)₃Si-(CH₂)₃-Sₘ-(CH₂)₃-Si(OC₂H₅)₃ with m = 1 to 8,
X being selected from sulfur or oxygen and
the molar ratio of a) and/or b) to c) being from 5:1 to 1:5 mol%.

2. Rubber compound according to Claim 1, **characterized in that** the molar ratio of a) and/or b) to c) is from 3:1 to 1:3, preferably from 2:1 to 1:2 mol%.

3. Rubber compound according to Claim 1 or 2, **characterized in that** it contains from 3 to 20 phf (parts by weight per 100 parts by weight of the filler interacting with the silane coupling agent) of silane coupling agent.

4. Rubber compound according to at least one of Claims 1 to 3, **characterized in that** the X in the silane coupling agent a) and/or b) are sulfur atoms.

5. Rubber compound according to at least one of Claims 1 to 3, **characterized in that** the X in the silane coupling agent a) and/or b) are oxygen atoms.

6. Rubber compound according to at least one of the preceding claims, **characterized in that** the filler interacting with the silane coupling agents is silica.

7. Rubber compound according to at least one of the preceding claims, **characterized in that** it contains from 10 to 140 phr (parts by weight per 100 parts by weight of the total rubber components) of filler interacting with the silane coupling agents.

8. Tyres, in particular pneumatic vehicle tyres, whose tread is at least partly based on a sulfur-vulcanized rubber compound according to any of Claims 1 to 7.

## Revendications

1. Mélange de caoutchouc réticulable au soufre pour la fabrication de bandes de roulement pour pneus, qui contient au moins un caoutchouc diénique, au moins deux agents de couplage silane différents, au moins une charge interagissant avec les agents de couplage silane, ainsi que des additifs usuels supplémentaires, **caractérisé en ce qu'**il contient en tant qu'agents de couplage silane a) (C₂H₅O)₃Si-(CH₂)₃-X-(CH₂)₆-S₂-(CH₂)₆-X-(CH₂)₃-Si (OC₂H₅)₃ et /ou b) (C₂H₅O)₃Si- (CH₂)₃-X- (CH₂)₁₀-S₂-(CH₂)₆-X- (CH₂)₁₀-Si (OC₂H₅)₃
en combinaison avec c) (C₂H₅O)₃Si-(CH₂)₃-Sₘ-(CH₂)₃-Si(OC₂H₅)₃ avec m = 1 à 8,
X étant choisi parmi le soufre et l'oxygène et
le rapport molaire entre a) et/ou b) et c) étant de 5:1 à 1:5 % en moles.

2. Mélange de caoutchouc selon la revendication 1, **caractérisé en ce que** le rapport molaire entre a) et/ou b) et c) est de 3:1 à 1:3, de préférence de 2:1 à 1:2 % en moles.

3. Mélange de caoutchouc selon la revendication 1 ou 2, **caractérisé en ce qu'**il contient 3 à 20 phf (parties en poids pour 100 parties en poids de la charge interagissant avec l'agent de couplage silane) d'agent de couplage silane.

4. Mélange de caoutchouc selon au moins l'une quelconque des revendications 1 à 3, **caractérisé en ce que** les X dans l'agent de couplage silane a) et/ou b) sont des atomes de soufre.

5. Mélange de caoutchouc selon au moins l'une quelconque des revendications 1 à 3, **caractérisé en ce que** les X dans l'agent de couplage silane a) et/ou b) sont des atomes d'oxygène.

6. Mélange de caoutchouc selon au moins l'une quelconque des revendications précédentes, **caractérisé en ce que** la charge interagissant avec les agents de couplage silane est de la silice.

7. Mélange de caoutchouc selon au moins l'une quelconque des revendications précédentes, **caractérisé en ce qu'**il contient 10 à 140 phr (parties en poids pour 100 parties en poids de la totalité des composants de caoutchouc) de charge interagissant avec les agents de couplage silane.

8. Pneus, notamment pneus automobiles, dont les bandes de roulement sont au moins en partie à base d'un mélange de caoutchouc vulcanisé au soufre selon l'une quelconque des revendications 1 à 7.
